Europäisches Patentamt

European Patent Office

Office européen des brevets

(11) Veröffentlichungsnummer: **0 380 789**
**A2**

## (12) EUROPÄISCHE PATENTANMELDUNG

(21) Anmeldenummer: 89122746.4

(51) Int. Cl.⁵: **H04N 5/14**

(22) Anmeldetag: 09.12.89

(30) Priorität: 24.01.89 DE 3901970

(43) Veröffentlichungstag der Anmeldung:
08.08.90 Patentblatt 90/32

(84) Benannte Vertragsstaaten:
AT DE FR IT

(71) Anmelder: GRUNDIG E.M.V.
Elektro-Mechanische Versuchsanstalt Max
Grundig holländ. Stiftung & Co. KG.
Kurgartenstrasse 37
D-8510 Fürth/Bay.(DE)

(72) Erfinder: Knauf, Burkhard, Dipl.-Ing.(FH)
Grundig E.M.V.
Max Grundig holländ. Stifting & Co KG.
Kurgartenstrasse 37 D-8510 Fürth/Bay(DE)

(54) **Anordung zur Regelung des Arbeitspunktes einer Video Endstufe.**

(57) Bekannte Videoendstufen mit Sperrpunktregelung arbeiten bei breitbandigen Eingangssignalen nicht zufriedenstellend. Mittels der neuen Anordnung soll sowohl ein breitbandiger Betrieb der Videoendstufe als auch eine fehlerfreie Sperrpunktstrommessung möglich sein.

Dies wird im wesentlichen mittels einer Vorspannungsschaltung erreicht, welche außerhalb des Sperrpunktstrom-Meßzeitintervalles einen Ruhestrom im Videoendverstärker zuläßt und während des Sperrpunktstrom-Meßzeitintervalles einen Ruhestromf luß unterbindet.

Fernsehempfänger, Datensichtgeräte

EP 0 380 789 A2

## ANORDNUNG ZUR REGELUNG DES ARBEITSPUNKTES EINER VIDEOENDSTUFE

Die Erfindung betrifft eine Anordnung zur Regelung des Arbeitspunktes einer Videoendstufe mit den im Oberbegriff des Anspruchs 1 angegebenen Merkmalen.

Eine derartige Anordnung ist aus den Technischen Informationen von Valvo, TI 830208, mit der Bezeichnung "Video-Kombinationen TDA 3505 und TDA 3506 mit Sperrpunktregelung", bekannt. Mittels der bekannten Anordnung wird eine automatische, dynamische Sperrpunkteinstellung dadurch erreicht, daß in einem für die Bilddarstellung nicht benötigten Zeitintervall periodisch der Kathodenstrom jedes Bildröhrensystems bei einem bestimmten Bildröhrensignalpegel (Schwarzwert) gemessen und mit einem Sollwert verglichen wird, der dem gewünschten Dunkelstrom entspricht. Aus den Abweichungen zwischen Soll- und Istwert wird eine Stellgröße abgeleitet, die über die Videoendstufe den Kathodenstrom beeinflußt. Die Stellgröße wird zwischengespeichert, so daß sie auch außerhalb der Meßzeit bei geöffneter Regelschleife wirksam ist, d.h. daß die Pegelverschiebung des Endstufen-Ansteuersignals auch während der Bilddarstellung beibehalten wird.

Die bekannte Anordnung arbeitet bei der heutigen Videostandardbandbreite von 5 MHz zufriedenstellend. Da der gemessene Sperrpunktstrom bzw. Dunkelstrom in der Größenordnung von 10 $\mu$A liegt, muß darauf geachtet werden, daß bei der Sperrpunktstrommessung keine die Messung verfälschenden Ruheströme fließen. Dies wird in der Praxis durch einen an die eigentliche Endstufe angehängten Meßtransistor erreicht. Es sind aber auch schon Videoendstufen bekannt, bei denen ein zur Endstufe gehöriger Transistor auch als Meßtransistor verwendet wird.

Zukünftige Videosysteme haben eine Videobandbreite von 10 MHz und mehr. Die bekannten Anordnungen arbeiten bei einem derartigen breitbandigen Betrieb nicht mehr zufriedenstellend.

Die Aufgabe der Erfindung besteht darin, eine Anordnung mit den im Oberbegriff des Ansprüches 1 angegebenen Merkmalen derart weiterzubilden, daß sie auch für höhere Bandbreiten gut geeignet ist.

Diese Aufgabe wird bei einer Anordnung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen der Erfindung sind in den Unteransprüchen beschrieben.

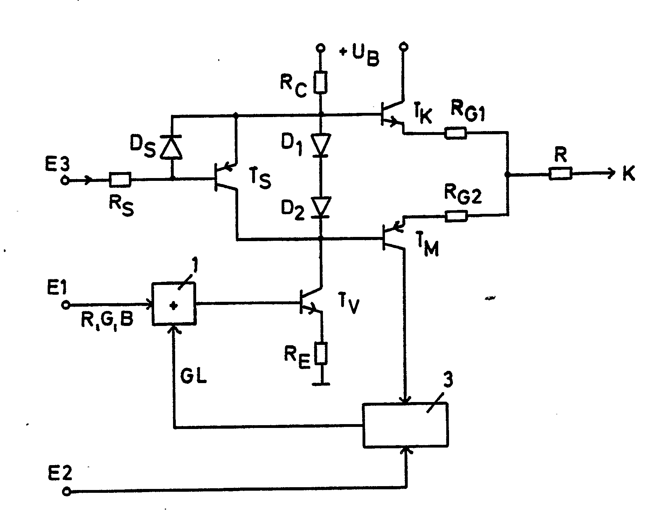

Die Vorteile der Erfindung bestehen insbesondere darin, daß bei einer Anordnung mit den im Anspruch 1 angegebenen Merkmalen sowohl eine fehlerfreie Messung der Sperrpunktströme als auch eine hohe Bandbreite der Videoendstufe erreichbar ist. Weitere vorteilhafte Eigenschaften der beanspruchten Anordnung ergeben sich aus der beispielhaften Erläuterung der Erfindung anhand der Figur.

Die zu verstärkende Farbkomponente R, G oder B eines Video-Komponentensignals liegt am Eingang E1 der gezeigten Anordnung an und wird einem ersten Eingang einer Addierstufe 1 zugeführt. Am anderen Eingang der Addierstufe 1 liegt ein in einer Meßschaltung 3 ermittelter Gleichspannungswert GL an.

Das Ausgangssignal der Addierstufe 1 wird an die Basis eines npn-Spannungsverstärkungstransistors $T_V$ angelegt, dessen Emitter über einen Widerstand $R_E$ auf Masse liegt. Der Kollektor des Spannungsverstärkungstransistors $T_V$ ist mit der Basis eines pnp-Transistors $T_M$ verbunden.

Ein am Eingang E3 der gezeigten Anordnung anliegender Schaltimpuls wird über einen Widerstand $R_S$ an die Basis eines pnp-Ruhestromschalttransistors $T_S$ angelegt. Die Basis des Transistors $T_S$ ist ferner über eine Schutzdiode $D_S$ mit dessen Emitter und mit der Basis eines npn-Transistors $T_K$ verbunden. Der Kollektor des Transistor $T_S$ ist an die Basis des Transistors $T_M$ angeschlossen.

Zwischen die Basis des Transistors $T_K$, die über einen Widerstand $R_C$ mit der Betriebsspannung $+U_B$ verbunden ist, und die Basis des Transistors $T_M$ ist eine Reihenschaltung, bestehend aus den Dioden $D_1$ und $D_2$, geschaltet. Der Kollektor des Transistors $T_K$ ist mit der Betriebsspannung $+U_B$ und sein Emitter über Stromgegenkopplungswiderstände $R_{G1}$ und $R_{G2}$ mit dem Emitter des Transistors $T_M$ verbunden. Die Transistoren $T_K$ und $T_M$ bilden eine Transistor-Gegentaktschaltung.

Die Bildröhrenkathode ist über einen Widerstand R an den Verbindungspunkt zwischen den beiden Stromgegenkopplungswiderständen $R_{G1}$ und $R_{G2}$ angeschlossen.

Der Kollektor des Transistors $T_M$ ist mit der Meßschaltung 3 verbunden. Ferner wird der Meßschaltung 3 ein am Eingang E2 der gezeigten Anordnung anliegender Meßzeilentastimpuls zugeführt.

Die gezeigte Anordnung funktioniert wie folgt:

Während der Bildhinlaufzeit liegt der Schaltimpuls am Eingang E3 der Anordnung nicht vor. Das Potential am Eingang E3 liegt in der Größenordnung der Betriebsspannung $+U_B$. Demzufolge ist der Ruhestromschalttransistor $T_S$ gesperrt und an der Basis des Transistors $T_K$ liegt eine um ca. 1.3 V höhere Gleichspannung als an der Basis des Transistors $T_M$. Aufgrund dieser Vorspannung fließt zwischen den Emittern der Transistoren $T_K$ und $T_M$

ein Ruhestrom. Die Stromgegenkopplungswiderstände $R_{G1}$ und $R_{G2}$ sind im Sinne einer Ruhestromstabilisierung dimensioniert.

Der vorstehend beschriebene, während der Bildhinlaufzeit fließende Ruhestrom der Gegentakttransistoren $T_K$ und $T_M$ bewirkt, daß der Videoendverstärker in einem breiten Frequenzbereich arbeitet und in diesem breiten Frequenzbereich eine hohe Verstärkungswirkung hat. Dies ist darauf zurückzuführen, daß die Gegentakttransistoren nur mit einem geeignet dimensionierten Ruhestrom eine ausreichende Entkoppelung des Widerstandes $R_C$ von der komplexen Last des Kathodensystems gewährleisten und somit einen breiten Frequenzgang und gute Aussteuerbarkeit ermöglichen.

Die zwischen der Basis und dem Emitter des Ruhestromschalttransistors $T_S$ angeordnete Diode $D_S$ dient dazu, zwischen der Basis und dem Emitter des Transistors $T_S$ das Auftreten einer großen Spannungsdifferenz in Sperrichtung zu verhindern, wie sie bei bestimmten Aussteuerungsverhältnissen auftreten könnte und zu einer Zerstörung des Transistors führen würde.

Die Meßschaltung 3 ist während der Bildhinlaufzeit deaktiviert.

Während der Bildrücklaufzeit bzw. in den vertikalen Austastlücken wird der gezeigten Anordnung über den Eingang E3 ein negativ gerichteter Schaltimpuls zugeführt, der aus dem im Fernsehsignal ohnehin vorhandenen Sandcastle-Signal abgeleitet ist und den Eingang E3 etwa auf Massepotential bringt. Der Schaltimpuls liegt über den Widerstand $R_S$ an der Basis des Ruhestromschalttransistors $T_S$ und steuert diesen in den leitenden Zustand. Dadurch tritt zwischen der Basis des Transistors $T_K$ und der Basis des Transistors $T_M$ nahezu kein Gleichspannungsversatz mehr auf und die Transistoren $T_K$ und $T_M$ sind gesperrt. Demzufolge fließt in den vertikalen Austastlücken zwischen den Emittern der Transistoren $T_K$ und $T_M$ kein Ruhestrom.

Während der in den vertikalen Austastlücken liegenden Meßzeilen wird der gezeigten Anordnung über den Eingang E1 ein Schwarzwertsignal und über den Eingang E2 ein Meßzeilentastimpuls zur Aktivierung der Meßschaltung 3 zugeführt. Der Meßzeilentastimpuls kann beispielsweise mittels einer geeigneten Verzögerung aus dem Vertikalsynchronsignal gewonnen werden. Das Schwarzwertsignal wird im Spannungsverstärkungstransistor $T_V$ verstärkt und prägt der Basis des Transistors $T_M$, der in diesem Zeitintervall als Meßtransistor verwendet wird, ein bestimmtes Gleichspannungsniveau auf. Dadurch fließt der Bildröhrenkathodenstrom über die Widerstände R und $R_{G2}$ sowie die Emitter-Kollektor-Strecke des Transistors $T_M$ in die Meßschaltung 3.

Dort erfolgt ein Vergleich des Bildröhrenkathodenstroms mit einem Sollwert, der dem gewünschten Dunkelstrom entspricht. Aus der ermittelten Differenz wird eine Stellgröße abgeleitet und zwischengespeichert. Diese Stellgröße wird (auch außerhalb der vertikalen Austastlücken) in Form eines Gleichspannungswertes im Addierer 1 der am Eingang E1 der Anordnung anliegenden Farbkomponente R, G oder B im Sinne einer Arbeitspunkteinstellung für den Videoendverstärker überlagert.

Die vorstehend beschriebene Anordnung ermöglicht demzufolge während der Bildhinlaufzeit einen breitbandigen, hochqualitativen Betrieb des Videoendverstärkers und während der vertikalen Austastlücken ein von Ruheströmen nahezu unbeeinflußte, fehlerfreie Scharzwert- bzw. Sperrpunktmessung.

Da in der Praxis in den vertikalen Austastlücken kleine Restströme zwischen den Emittern der Transistoren $T_K$ und $T_M$ fließen können, die die Sperrpunktmessung geringfügig beeinflussen können, besteht eine vorteilhafte Weiterbildung der Erfindung darin, mittels der Meßschaltung 3 während einer zusätzlichen Meßzeile innerhalb der vertikalen Austastlücken die Restströme zu messen, in Form eines Gleichspannungswertes in einem Speicher zwischenzuspeichern und während der Meßzeit der Kathodenströme vom Meßwert, der aus der Summe von eigentlichem Kathodenstrom und Restströmen besteht, zu subtrahieren.

## Ansprüche

1. Anordnung zur Regelung des Arbeitspunktes einer Videoendstufe, mit
- einem Videoendverstärker zur Verstärkung einer Videosignalkomponente,
- einer Meßschaltung zur Messung der Sperrpunktströme während eines Meßzeitintervalles, und
- einer Additionsschaltung, in der der zu verstärkenden Videosignalkomponente ein in der Meßschaltung gewonnenes Gleichspannungssignal im Sinne einer Arbeitspunkteinstellung überlagert wird, **dadurch gekennzeichnet**, daß die Videoendstufe weiterhin eine Vorspannungsschaltung ($D_S$, $T_S$, $R_S$, $R_C$, $D_1$, $D_2$) aufweist, welche
- außerhalb des Meßzeitintervalles der Sperrpunktströme eine erste Vorspannung für den Videoendverstärker derart erzeugt, daß im Videoendverstärker ein Ruhestrom fließt, und
- während des Meßzeitintervalles der Sperrpunktströme eine weitere Vorspannung für den Videoendverstärker derart erzeugt, daß im Videoendverstärker kein Ruhestrom fließt.

2. Anordnung nach Anspruch 1, **dadurch gekennzeichnet**, daß der Videoendverstärker eine Transistor-Gegentaktschaltung ($T_K$, $T_M$) aufweist.

3. Anordnung nach Anspruch 2, **dadurch ge-**

kennzeichnet, daß die Vorspannungsschaltung zwei in Reihe geschaltete Dioden ($D_1$, $D_2$) enthält, welche zwischen die Basen der Gegentakttransistoren ($T_K$, $T_M$) geschaltet sind.

4. Anordnung nach Anspruch 3, **dadurch gekennzeichnet**, daß die Vorspannungsschaltung einen Ruhestromschalttransistor ($T_S$) enthält, der parallel zur Reihenschaltung der Dioden ($D_1$, $D_2$) angeordnet ist.

5. Anordnung nach Anspruch 4, **dadurch gekennzeichnet**, daß der Basis des Ruhestromschalttransistors ($T_S$) während des Meßzeitintervalles der Sperrpunktströme ein Schaltsignal zugeführt wird, aufgrund dessen sich der Ruhestromschalttransistor ($T_S$) im leitenden Zustand befindet.

6. Anordnung nach Anspruch 5, **dadurch gekennzeichnet**, daß das Schaltsignal aus dem Sandcastle-Signal genommen wird.

7. Anordnung nach einem oder mehreren der Ansprüche 4 - 6, **dadurch gekennzeichnet**, daß die Basis und der Emitter des Ruhestromschalttransistors ($T_S$) über eine Schutzdiode ($D_S$) miteinander verbunden sind.